# EUROPÄISCHE PATENTSCHRIFT

(11) **EP 2 746 194 B1**
(45) Veröffentlichungstag und Bekanntmachung des Hinweises auf die Patenterteilung: **12.05.2021**
(21) Anmeldenummer: 12198832.3
(22) Anmeldetag: 21.12.2012
(51) Int. Cl.: B65G 1/137

(54) **Fördertechnikunterstützte Kommissionierung von Waren**
Conveyor-assisted picking of goods
Commissionnement assisté par technique de transport de marchandises

(43) Veröffentlichungstag der Anmeldung: 25.06.2014
(73) Patentinhaber: Moosburger Logistics Network & Development KG, 8042 Graz (AT)
(72) Erfinder: Moosburger, Michael, 8072 Fernitz (AT); Gleiss, Martin, 4863 Seewalchen (AT)
(74) Vertreter: Margotti, Herwig Franz

(56) Entgegenhaltungen:
- EP-A2- 1 452 462
- EP-A2- 1 659 077
- EP-A2- 2 154 088
- WO-A1-2005/118436
- WO-A1-2011/036238
- WO-A2-2008/067516
- DE-A1-102011 012 950
- JP-A- H0 532 306
- JP-A- H0 543 005
- JP-A- 2010 058 904
- US-A1- 2008 167 933

## Beschreibung

Die Erfindung betrifft ein Verfahren zur halbautomatischen Kommissionierung von Waren, und dessen Umsetzung mit Hilfe von automatisierten und halbautomatischen Fördersystemen und Ware zum Mann - Arbeitsplätzen.

Die heute eingesetzten Verfahren zur Kommissionierung von FMCG's (Fast Moving Consumer Goods) sind folgende:
a) Manuelle Kommissioniermethoden:
   Diese Kommissioniermethoden haben gemeinsam, dass ein Mitarbeiter unter Zurücklegung von mehr oder weniger großen Wegstrecken durch das Lager Ware für Kundenaufträge zusammenstellt. Der Mitarbeiter wird dabei durch Scanner, Voice-Befehle, Lichter (pick by light) oder Etiketten und Kommissionierlisten unterstützt. Folgende Abläufe werden dabei angewandt:
   - Klassische manuelle Kommissionierung: Der Arbeiter fährt oder geht durch Regale und sammelt (pickt) einzelne Artikel auf Transporthilfsmittel, die zur Auslieferung an die Kunden verwendet werden.
   - Umgekehrte manuelle Kommissionierung: Wenn die Anzahl der Artikel kleiner ist als die Anzahl der zu bedienenden Kunden, fährt der Arbeiter mit der auf einer Artikelpalette befindlichen Ware durch ein Lager und teilt die Artikel auf bereitstehende Kunden-Transporthilfsmittel auf.
b) Automatisationsunterstützte Kommissionierverfahren:
   Hier wird versucht die manuelle Arbeit des Kommissionierers durch Maschinen zu unterstützen bzw. zu ersetzen. Man unterscheidet teilautomatisierte und voll automatisierte Verfahren:
   - Teilautomatisiert: Hier wird Ware, die an Kunden zu verteilen ist zuerst von der Original-Palette in Einzelpackungen entstapelt. Dieser Vorgang kann vollautomatisch oder teilautomatisiert erfolgen. Danach werden diese Einzelpackungen, sog. Colli, in verschiedenen Lagersystemen eingelagert. Ein Kundenauftrag wird dann derart zusammengestellt, dass diese Colli einzeln an einen automatisierten oder teilautomatisierten Arbeitsplatz angedient werden, an dem der Kundenauftrag durch Einsortieren der Colli in Kunden-Transporthilfsmittel zusammengestellt wird.
   - Voll automatisiert: Hier sind sowohl der Entstapelvorgang der Colli von der Original-Palette wie auch der Stapelvorgang der Colli auf die Kunden-Transporthilfsmittel komplett durch Maschinen abgebildet. Ebenfalls wird hier die Original-Palette zuerst entstapelt, die einzelnen Colli in Kisten, Tablaren oder Kanalläger zwischengelagert und anschließend dem Kommissionierplatz angedient, an dem sie automatisiert durch Roboter oder andere Technologien zum Kunden-Transporthilfsmittel (Kundenpalette, Rollbehälter, Dolly,..) zusammengeschlichtet wird.

Diese automatisierten Verfahren weisen daher folgende Merkmale auf:
- Vereinzeln der Original-Palette in Einzel-Colli
- Zwischenlagerung von Einzel-Colli
- Zusammenschichten von Einzel-Colli zu Kundenaufträgen

Folgende Probleme ergeben sich bei diesen automatisierten Verfahren:
- FMCG's werden mindestens 2x angegriffen (je nach Automatisierungsgrad durch Mensch oder Maschine). Bei einer rein manuellen Kommission wie oben beschrieben passiert das nur 1x. Daher ist die rein wirtschaftliche Rentabilität derartiger Systeme im Vergleich zur manuellen Kommission nur selten gegeben.
- FMCG's werden mittels außerordentlich teurer Lagertechnik als Einzel-Colli zwischengelagert.
- Hochkomplexe Systeme: Diese Verfahren werden in der Regel über ein manuelles oder automatisches Hochregallager, eine Entstapeleinheit, ein Behälterlager für die Colli, eine Stapeleinheit und die jeweils dazwischen liegende Fördertechnik und Softwaresteuerung abgewickelt.
- Derartige Systeme sind in der Regel ausschließlich für A, B oder C-Artikel geeignet. A-Artikel sind häufig benötigte Artikel, die auch als schnell drehend bezeichnet werden. B-Artikel sind durchschnittlich oft benötigte Artikel, die auch als mittel drehend bezeichnet werden. C-Artikel sind selten benötigte Artikel, die auch als langsam drehend bezeichnet werden. Daher müssen oft mehrere unterschiedliche automatisierte Systeme kombiniert werden, um die komplette Auftragsbearbeitung abzubilden. Das führt zur Aufsplittung von Aufträgen in unterschiedlichen Kommissionierbereichen. Die kommissionierte Ware muss dann, um die Auslastung der zum Versand eingesetzten Fahrzeuge zu gewährleisten, nach der Fertigstellung noch einmal verdichtet werden. Während dieses Verdichtungsvorgangs wird die Ware dann das dritte Mal angegriffen.

Vorteile dieser automatisierten Verfahren und Systeme:
- Bessere Ergonomie für die Kommissionierer als bei der rein manuellen Kommissionierung, weil die Arbeitsplätze für den Mitarbeiter optimiert werden können, insbesondere die Arbeitshöhe eingestellt werden kann.
- In der Regel etwas geringerer Personalbedarf, da die Wegstrecken für den Kommissionierer wegfallen. Diesem Vorteil steht aber ein hoher Aufwand für ausgebildetes Wartungspersonal gegenüber.
- Ausgehend von der Problematik des vorgenannten Standes der Technik wurde in der EP 2 154 088 A2 ein Verfahren zur Kommissionierung von Waren vorgeschlagen, mit dem Colli direkt von einer Quell-Palette auf ein Kunden-Transporthilfsmittel, wie eine Kundenpalette, ein Rollbehälter, etc. gebracht werden können, ohne dass dabei die systembedingten Nachteile der klassisch manuellen Kommission, nämlich lange Wegzeiten des Kommissionierers und schlechte Ergonomie seines Arbeitsplatzes zum Tragen kommen. Aufwändige Komponenten und Prozessschritte, wie sie von anderen am Markt befindlichen automatisierten Systeme und Verfahren verwendet werden, werden dabei vermieden.

Das in der EP 2 154 088 A2 offenbarte Kommissioniersystem ist durch Standard-Fördertechnik-Komponenten realisierbar, wodurch eine billige, schnelle und verlässliche Konzipierung und Bauweise von entsprechenden Kommissionierlagern und deren Betrieb ermöglicht wird.

Das in EP 2 154 088 A2 offenbarte Kommissioniersystem benutzt zum Transport der Paletten stationäre Palettenfördertechnik, wie z.B. Förderbänder, auf Schienen laufende Regalbediengeräte, etc. In der Regel besteht ein automatisches Hochregallager aus mehreren Gassen. Wenn Paletten aus diesen Gassen ausgelagert werden, muss die Steuerung des Auslagerns aus allen Gassen so erfolgen, dass auf der aus dem Hochregallager abführenden Fördertechnik die Produkte in der richtigen Reihenfolge platziert werden, in der sie an den Kommissionierstationen gebraucht werden, da ein späteres "Überholen" nicht möglich ist. Dasselbe gilt für das Einlagern der Paletten im Hochregallager. Diese Einschränkungen drosseln nochmals die sowieso meist kritische Ein- Auslagerkapazität eines Hochregallagers, da die einzelnen Regalbediengeräte nicht mehr wegoptimiert arbeiten können, sondern vielmehr auf die Bedürfnisse an den Kommissionierstationen ausgerichtet zeitlich in der richtigen Reihenfolge auslagern müssen. Zusätzlich besteht dabei das Problem, dass diese Technik folgende Nachteile aufweist:
- hohe Kosten in der Investition;
- hohe Wartungskosten;
- hohe Abhängigkeit bei Stillstand da dabei das gesamte System zum Stillstand kommt;
- keine Möglichkeit des "Überholens" von Paletten;
- starke Leistungsbegrenzung des Gesamtsystems.

Der vorliegenden Erfindung liegt die Aufgabe zugrunde, eine Lösung für die oben angesprochenen Probleme zu finden. Insbesondere liegt eine Aufgabe der Erfindung in der Erhöhung der Leistung der Kommissionierung und der Handhabung von ganzen Paletten.

Die vorliegende Erfindung löst diese Aufgabe durch ein Kommissionierverfahren mit den kennzeichnenden Merkmalen des Anspruchs 1 und durch ein Kommissioniersystem mit den kennzeichnenden Merkmalen des Anspruchs 8. Vorteilhafte Ausgestaltungen der Erfindung sind in den Unteransprüchen dargelegt.

Das Dokument DE 10 2011 012950 A1 offenbart ein Kommissionierverfahren und -system gemäß den Oberbegriffen der Ansprüche 1 bzw. 8.

Das Wesen der Erfindung liegt in der Tatsache, dass die Beförderung der Paletten auf den Förderstrecke mittels automatisch geführter Fahrzeuge erfolgt. Die großen Vorteile dieser Technik in diesem Bereich liegen an folgenden Punkten:
- die Investition in ein Lager ist an die nötige Leistung des Lagers anpassbar und kann fast beliebig im laufenden Betrieb erhöht werden;
- deutlich geringere Installationskosten;
- deutlich geringere Wartungskosten;
- wesentlich schnelleres Gesamtsystem;
- keine Abhängigkeit in der Verfügbarkeit von einzelnen Palettenfördertechnikkomponenten - sollte ein automatisch gesteuertes Fahrzeug ausfallen, so übernimmt ein Ersatzfahrzeug oder eines oder mehrere der vorhandenen automatisch gesteuerten Fahrzeuge die Aufgaben des ausgefallenen Fahrzeugs, wodurch ein Fortführen der Produktion möglich ist.

Durch die Maßnahme Paletten, bei denen man von vornherein weiß oder definiert, dass sie als Ganzes in den Warenausgangsbereich verbracht werden, in einem Ganz-Palettenlager zwischenzulagern, wobei die Quell-Paletten auf einer Förderstrecke mittels automatisch geführter Fahrzeuge zu dem Ganz-Palettenlager geführt werden, wird eine wesentliche Erhöhung der Leistung des Kommisionierverfahrens bzw. -systems erzielt.

Mit dieser Erfindung ist es einfach möglich in bestehende manuelle Lager mechanisierte Komponenten zu integrieren. Insbesondere können in einem manuellen Lager Kommissionierstationen einfach nachinstalliert werden, und aus dem bestehenden Lager werden mittels der automatisch gesteuerten Fahrzeuge die Paletten zu den jeweiligen Stationen zu- und abgeführt.

Beim erfindungsgemäßen Verfahren und System zur Kommissionierung von auf Quell-Paletten in einem Palettenlager gelagerten Waren gemäß Kundenaufträgen werden die Quell-Paletten auf einer Wareneingangs-Förderstrecke vom Wareneingang in das Palettenlager eingelagert. Die Quell-Paletten werden über eine Zuführ-Förderstrecke vom Palettenlager zu zumindest einem Kommissionierarbeitsplatz gefördert und über eine Abzugs-Förderstrecke zurück in das Palettenlager oder zu einem weiteren Kommissionierarbeitsplatz gefördert. Jeder Kommissionierarbeitsplatz weist Packstationen auf, in denen Kunden-Transporthilfsmittel zur Aufnahme der zu kommissionierenden Waren bereitgestellt werden. Beim Kommissionieren werden an all jenen Packstationen, die gemäß den Kundenaufträgen Waren aus der Quell-Palette zu erhalten haben, Waren aus der Quell-Palette in die Kunden-Transporthilfsmittel gelegt. Die Beförderung der Quell-Paletten erfolgt auf der Wareneingangs-Förderstrecke und/oder auf der Zuführ-Förderstrecke und/oder der Abzugs-Förderstrecke mittels automatisch geführter Fahrzeuge.

Die Vorteile der Erfindung kommen umso mehr zur Geltung, je mehr Förderstrecken für die Paletten ausschließlich von automatisch gesteuerten Fahrzeugen bedient werden; im Optimalfall werden alle Förderstrecken für die Paletten von automatisch gesteuerten Fahrzeugen bedient. Deshalb sollten auch die Kunden-Transporthilfsmittel auf einer Warenausgangs-Förderstrecke mittels automatisch geführter Fahrzeuge zu einem Warenausgangsbereich transportiert werden.

In manchen Lagern ist vorgesehen, dass langsam drehende oder auch als C-Waren bezeichnete Produkte in ein Pick-to-Belt-Lager, das als separates Lager oder als Teil des Palettenlagers ausgeführt, zwischengelagert werden. In einer Ausführungsform der Erfindung ist vorgesehen, dass Quellpaletten auf der Wareneingangs-Förderstrecke mittels automatisch geführter Fahrzeuge in das Pick-to-Belt-Lager eingelagert und vom Pick-to-Belt-Lager auf einer Förderstrecke mittels automatisch geführter Fahrzeuge zu den Kommissionierarbeitsplätzen gefördert werden.

Üblicherweise umfassen der Wareneingang, der Warenausgang und der Kommissionierbereich jeweils mehrere Stationen. Auch das Regallager weist meist mehrere Stationen in Form von mehreren Gassen auf. Mithilfe der erfindungsgemäß vorgesehenen automatisch geführten Fahrzeuge ist es möglich, alle Stationen eines Bereichs mit allen Stationen des benachbarten Bereichs zu verbinden. Das bedeutet, dass alle Bereiche des Lagers wegoptimiert betrieben werden können und nicht mehr gegenseitig synchronisiert werden müssen. Dadurch steigt die verfügbare Leistung des Lagers deutlich an. Insbesondere ist gemäß der Erfindung vorgesehen, dass der Wareneingang mehrere Stationen umfasst und das Regallager mehrere Stationen umfasst und alle zwischen dem Wareneingang und dem Regallager bewegten automatisch geführten Fahrzeuge alle Stationen anfahren können. In einer weiteren Ausführungsform umfasst das Regallager mehrere Stationen und mehrere Kommissionierarbeitsplätze, wobei alle zwischen dem Regallager und den Kommissionierarbeitsplätzen bewegten automatisch geführten Fahrzeuge alle Stationen anfahren können. In einer Ausführungsform der Erfindung sind mehrere Kommissionierarbeitsplätze vorgesehen und umfasst der Warenausgangsbereich mehrere Stationen, wobei alle zwischen den Kommissionierarbeitsplätzen und dem Warenausgangsbereich bewegten automatisch geführten Fahrzeuge alle Stationen anfahren können.

Eine besonders verlässliche Führung der Fahrzeuge wird erreicht, wenn die automatisch geführten Fahrzeuge optisch, oder induktiv, oder kapazitiv, oder per Funk gesteuert werden.

Ein automatisch geführtes Fahrzeug kann im einfachen Fall so ausgeführt sein, dass es nur die horizontalen Bewegungen der Paletten durchführt und eine notwendige vertikale Verlagerung der Paletten zur Ein- und Auslagerung mit herkömmlichen Staplern erfolgt. Bevorzugt übernehmen die automatisch geführten Fahrzeuge aber sowohl die horizontale als auch die vertikale Verlagerung der Paletten, weisen also ein "Hubmast"-Funktion auf. Dadurch wird es möglich die Vorteile des erfindungsgemäßen Systems im Bereich Ergonomie und Geschwindigkeit der Kommissionierarbeitsplätze ohne großen Investitionsaufwand in jedem bestehenden Lager zu integrieren. In einer weiteren Ausgestaltung der Erfindung ist vorgesehen, die Kommissionierarbeitsplätze mit Robotern auszurüsten, die an jenen Packstationen, die gemäß den Kundenaufträgen Waren aus der Quell-Palette zu erhalten haben, Waren aus der Quell-Palette in die Kunden-Transporthilfsmittel legen. Dadurch können wesentliche Anteile des anfallenden Kommissioniervolumens mechanisiert oder sogar voll automatisiert erledigt werden, indem anstelle einer Person ein Roboter die Kommissioniertätigkeit übernimmt.

Weitere Vorteile und Merkmale der Erfindung ergeben sich aus der nachfolgenden Beschreibung eines Ausführungsbeispiels unter Bezugnahme auf die Zeichnungen. In den Zeichnungen zeigen:
Fig. 1 ein Schaubild des Warenflusses vom Wareneingang bis zum Warenausgang gemäß der vorliegenden Erfindung;
Fig. 2 eine schematische Darstellung der logischen Pfade einer Quell-Palette im Zuge des erfindungsgemäßen Kommissionierverfahrens;
Fig. 3 eine schematische Darstellung eines Kommissionierarbeitsplatzes gemäß der Erfindung; und
Fig. 4 eine schematische Ansicht des erfindungsgemäßen Kommissioniersystems einschließlich wesentlicher Förderstrecken.

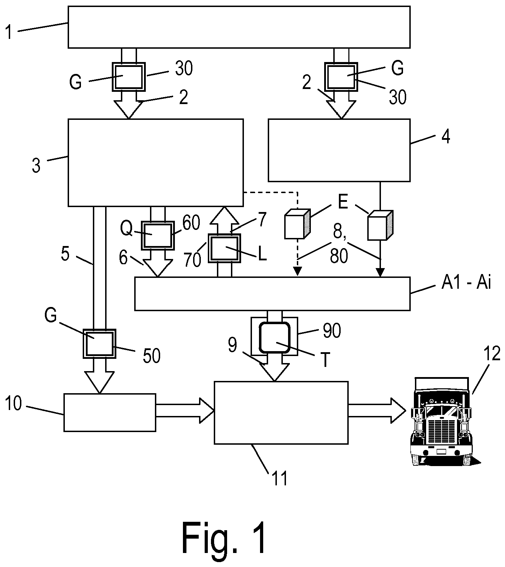

Zunächst wird anhand von Fig. 1 bis Fig. 3 der Warenfluss gemäß der vorliegenden Erfindung erläutert. Im Wareneingang 1 werden angelieferte Paletten G mithilfe von erfindungsgemäßen automatisch geführten Fahrzeugen 30 auf einer Förderstrecke 2 direkt in ein Palettenlager 3 verbracht und verbleiben dort bis zu dem Zeitpunkt, an dem Ware von einer Palette G für die Zusammenstellung von Kundenaufträgen benötigt wird. Die am Wareneingang 1 angelieferten Paletten G stammen entweder von Lieferungen mittels Transportfahrzeugen oder aus einer hauseigenen Produktion. Das Palettenlager 3 ist bevorzugt ein Standard-Hochregallager, das sowohl manuell mit Staplern als auch automatisch betrieben werden kann.

In einer ersten Ausführungsform der Erfindung kommen nur A- und B-Waren in das Palettenlager 3, Paletten G mit C-Waren werden dagegen ebenfalls mithilfe der automatisch geführten Fahrzeuge 30 auf einer Förderstrecke 2 in ein Paletten Pick-to-Belt Lager 4 verbracht.

In einer alternativen Ausführungsform werden auch die Paletten G mit C-Waren in das Palettenlager 3 verbracht und dort verarbeitet. Der Vorteil dieser Lösung liegt in einer reduzierten Komplexität von Hard- und Software, da ein Lagertyp weniger benötigt wird. Andererseits bietet die obige erste Ausführungsform den Vorteil, dass ein Pick-to-Belt Lager speziell für die jeweiligen Anforderungen an C-Waren ausgelegt werden kann.

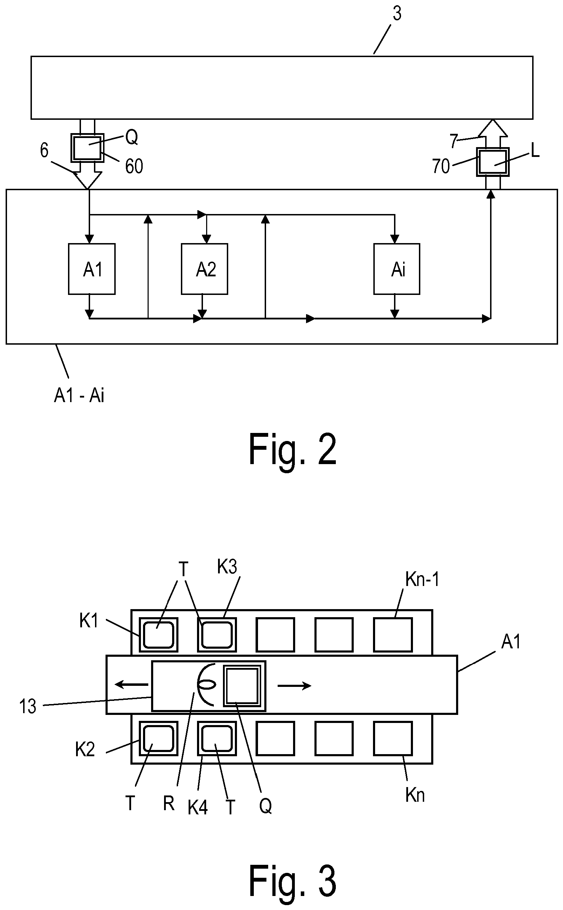

Die Bearbeitung der Kundenaufträge erfolgt Leitrechner-gesteuert in Batches, wobei bevorzugt mehrere Kundenaufträge zur gemeinsamen Bearbeitung zusammengefasst werden. Wie in Fig. 3 zu sehen ist jedem Kundenauftrag eine der Packstellen K1 - Kn zugeordnet, mehrere Packstellen K1 - Kn sind einem Roboter R an einem Kommissionierarbeitsplatz Ai zugeordnet, wobei mehrere gleichartige Kommissionierarbeitsplätze A1 - Ai vorgesehen sind, die je nach Arbeitsaufwand mit Robotern R ausgerüstet oder alternativ bemannt werden können. Die Anzahl der Kommissionierarbeitsplätze A1 - Ai ist durch die Anzahl der Kundenaufträge, deren Inhalt, durch die gewünschte Bearbeitungszeit und durch die Leistung der Roboter bzw. eventuell Bedienpersonen bestimmt. Dabei wird vom Leitrechner eine Gleichauslastung für die einzelnen Kommissionierarbeitsplätze A1 - Ai errechnet und entsprechend berücksichtigt. Ebenso berücksichtigt werden definierte Produktreihenfolgen, die in der Kommission eingehalten werden sollen.

Die für die Abarbeitung der Kundenaufträge benötigten Waren werden auf Quell-Paletten Q vom übergeordneten Steuerungssystem aus dem Palettenlager 3 in einer wegoptimierten Sequenz ausgelagert. Gemäß der errechneten Auslagersequenz werden die Quell-Paletten Q über eine Zuführ-Förderstrecke 6 mittels automatisch geführten Fahrzeugen 60 den Kommissionierarbeitsplätzen A1 - Ai zugeführt. Bei den Quell-Paletten Q handelt es sich entweder um ganze, das heißt noch nicht angebrochene Paletten G oder um im Zuge der Abarbeitung vergangener Kundenaufträge teilweise aufgebrauchte, d.h. angebrochene Paletten.

Unter besonderer Bezugnahme auf Fig. 3 wird nun die Behandlung von Quell-Paletten Q beispielhaft für den Kommissionierarbeitsplatz A1 beschrieben. Die angediente Quell-Palette Q wird auf ein Fahrzeug 13 gefördert, auf dem der Roboter R montiert ist und das sich zwischen beidseitig davon angeordneten Packstellen K1 - Kn vor- und zurückbewegt. Mithilfe eines Hebemittels, z.B. eines Hebetisches, wird die Quell-Palette Q in einer für den Roboter R günstigen Höhe positioniert. Gleichzeitig wird in einer der Packstellen, z.B. der einem ersten Kunden zugeordneten Packstelle K1, ein erstes Kunden-Transporthilfsmittel T, wie z.B. ein Rollwagen, eine Palette, ein Dolly, etc., ebenfalls in einer für den Roboter R günstigen Höhe positioniert. Der Roboter R schiebt daraufhin die durch den Kundenauftrag vorgegebene Anzahl an Einheiten der auf der Quell-Palette Q befindlichen Ware auf das Kunden-Transporthilfsmittel T des ersten Kunden.. Während der Roboter R noch die Kommissionierung für den ersten Kunden an der Packstelle K1 durchführt, positioniert sich auf der anderen Seite der Quell-Palette Q in der Packstelle K2 ein Kunden-Transporthilfsmittel T eines zweiten Kunden. Sobald der Roboter R die Kommissionierung an der ersten Packstation K1 abgeschlossen hat, arbeitet er den zweiten Kundenauftrag ab. Währenddessen positioniert sich bereits ein weiteres Kunden-Transporthilfsmittel T für einen dritten Kunden an der nächsten Packstation K3. Nachdem der Roboter R die zweite Kommissionierung an der zweiten Packstation K2 abgeschlossen hat, fährt das Fahrzeug 13 nach vor zur dritten Packstation K3 und stoppt dort, so dass der Roboter R die Kommissionierung an der dritten Packstation K3 durchführen kann. Danach erfolgt wie zuvor für die zweite Packstation K2 beschrieben, ein weiterer Kommissionierungsvorgang in der vierten Packstation K4, usw. Es ist vorgesehen, für einen Kunden immer nur ein Kunden-Transporthilfsmittel T bearbeiten zu lassen, und erst, wenn dieses voll ist, für diesen Kunden das nächste Kunden-Transporthilfsmittel T gleichzeitig zur Befüllung bereitzustellen (kann auch in einer anderen Packstation bereitgestellt werden). Diese Vorgangsweise sichert eine optimale Volumennutzung von Kunden-Transporthilfsmitteln T und Speditionsfahrzeugen. Der beschriebene Kommissionierablauf wiederholt sich so oft wie nötig.

Anschließend wird die jetzt teilweise ("angebrochen") oder vollständig geleerte Palette L vom Kommissionierarbeitsplatz A1 abgezogen und entweder zu einem weiteren Kommissionierarbeitsplatz A2 - Ai weiterbefördert oder über eine Abzugs-Förderstrecke 7 mittels eines automatisch geführten Fahrzeugs 70 (siehe Fig. 2 oder Fig. 3) ins Palettenlager 3 (angebrochene Paletten, die für spätere Kommissionierungen wieder als Quell-Paletten Q zur Verfügung stehen) oder zu einer Leerpaletten-Entsorgungsstelle zurückbefördert. Gleichzeitig mit dem Abziehen der teilweise oder ganz geleerten Palette L wird am Fahrzeug 13 des Kommissionierarbeitsplatzes A1 die nächste Quell-Palette Q angedient, worauf sich das Fahrzeug in die umgekehrte Richtung in Bewegung setzt und sich die Kommissioniervorgänge für die Packplätze Kn - K1 wiederholen. In einer bevorzugten Variante befindet sich der Roboter R am Fahrzeug 13 immer zwischen zwei Quell-Paletten Q und kommissioniert aus der in Fahrtrichtung gelegenen Quell-Palette.

Es sei erwähnt, dass nicht jedes Kunden-Transporthilfsmittel T Waren aus der "aktiven" Quell-Palette erhalten muss. Vielmehr können einzelne Packstationen auch übersprungen werden. Die Auslegung der Anzahl der Kunden, d.h. die Aktivierung von Packstationen K1 - Kn ist beliebig groß und wird jeweils spezifisch ermittelt. Dabei wird entweder versucht für alle Kunden eines Batches auf allen Kommissionierarbeitsplätzen A1 - Ai jeweils ein Kunden-Transporthilfsmittel T zur Verfügung stellen zu können, um die Anzahl der Quell-Palettenbewegungen zu minimieren, oder es wird versucht an einem Kommissionierarbeitsplatz mit möglichst hoher Wahrscheinlichkeit eine Quell-Palette völlig entleeren zu können, um die Bewegungen von Quell-Paletteen zwischen den Kommissionierarbeitsplätzen zu minimieren.

Fig. 2 zeigt die logischen Pfade für eine Quell-Palette Q zwischen allen Kommissionierarbeitsplätzen A1 - Ai und dem Palettenlager 3. Man erkennt, dass die Quell-Palette Q jedem Kommissionierarbeitsplatz A1 - Ai angedient werden kann, wobei aber auch beliebige ausgelassen werden können und am Ende des Pfades die nun teilweise oder ganz geleerten Palette L abgezogen wird.

In Fig. 13 ist weiters dargestellt, dass C-Artikel im Paletten Pick-to-Belt Lager 4 zur Vervollständigung von Kommissionen zu Einzel-Colli E vereinzelt und diese über eine Förderstrecke 8 mittels automatisch geführten Fahrzeugen 80 Kistenfördertechnik ebenfalls den Kommissionierarbeitsplätzen A1 - Ai angedient werden, wo sie von der jeweiligen Bedienperson in die Kunden-Transporthilfsmittel T gepackt werden. Nach der Vervollständigung eines Kunden-Transporthilfsmittels T gelangt dieses über eine weitere Förderstrecke 9 mittels automatisch geführter Fahrzeuge 90 in einen Warenausgangsbereich 11, wo die Kunden-Transporthilfsmittel T sie in Speditionsfahrzeuge 12 verladen werden.

Da es vorkommt, dass Kundenaufträge höhere Stückzahlen einer Ware beinhalten, als auf einer ganzen Palette G geladen sind, ist es sinnvoll, diese Ganzpaletten G separat über eine Förderstrecke 5 mittels automatisch geführter Fahrzeuge 50 und ein Ganzpalettenzwischenlager 10 in den Warenausgangsbereich 11 zu befördern, wo sie zusammen mit den Kunden-Transporthilfsmitteln T desselben Kundenauftrags in die Speditionsfahrzeuge 12 verladen werden.

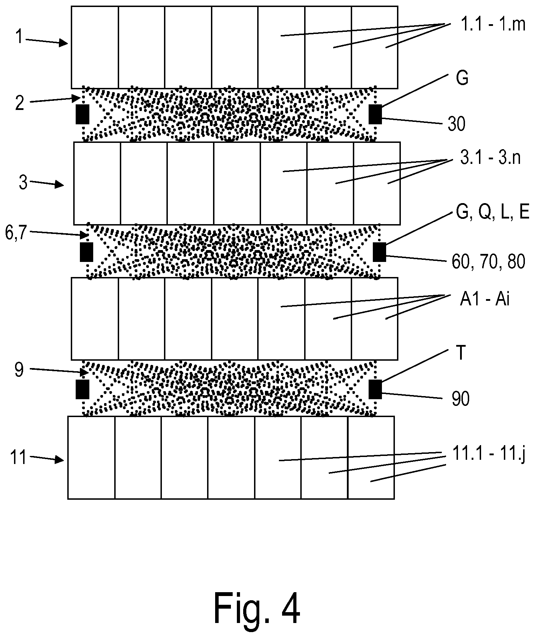

Fig. 4 zeigt eine schematische Ansicht des erfindungsgemäßen Kommissioniersystems einschließlich seiner wesentlicher Förderstrecken. Das System zur Kommissionierung von auf Quell-Paletten G, Q gelagerten Waren umfasst einen Wareneingang 1, der wiederum aus einer Vielzahl von Wareneingangsstationen (Toren) 1.1 bis 1.m besteht. Im Wareneingang 1 befindliche Quell-Paletten G werden auf einer Wareneingangs-Förderstrecke 2 zum Palettenlager 3 gefördert, das ebenfalls aus einer Vielzahl von Palettenlagerstationen (Gassen) 3.1 bis 3.n besteht. Die Förderung der Paletten zwischen dem Wareneingang 1 und dem Palettenlager 3 erfolgt mittels automatisch geführter Fahrzeuge 30, wobei jedes Fahrzeug 30 jede der Wareneingangsstationen 1.1 bis 1.m und jede der Palettenlagerstationen 3.1 bis 3.n anfahren kann. Als Wareneingangs-Förderstrecke 2 kann der gesamte Raum zwischen dem Wareneingang 1 und dem Palettenlager 3 definiert werden. Alternativ dazu können als Wareneingangs-Förderstrecke 2 vorgegebene Fahrrouten im Raum zwischen dem Wareneingang 1 und dem Palettenlager 3 definiert werden.

Vom Palettenlager 3 werden die Quell-Paletten G und auch Einzel-Colli E über eine Zuführ-Förderstrecke 6 mittels automatisch geführter Fahrzeuge 60, 80 zu einer Vielzahl von Kommissionierarbeitsplätzen A1 - Ai zugeführt. Nicht mehr benötigte Quell-Paletten G oder Leerpaletten L werden von den Kommissionierarbeitsplätzen A1 - Ai mittels automatisch geführter Fahrzeuge 70 auf einer Abzugsförderstrecke 7 zurück in das Palettenlager 3 oder zu einem weiteren Kommissionierarbeitsplatz A1 - Ai bewegt. Leerpaletten werden ebenfalls mit den Fahrzeugen 70 über die Abzugsförderstrecke 7 zurück in das Palettenlager 3 gebracht. Jedes automatisch führbare Fahrzeug 60, 70 (und optional 80) kann jede der Palettenlagerstationen 3.1 bis 3.n und jeden Kommissionierarbeitsplatz A1 bis Ai anfahren. Als Zuführ-Förderstrecke 6 und als Abzugs-Förderstrecke 7 kann der gesamte Raum zwischen dem Palettenlager 3 und den Kommissionierarbeitsplätzen A1 bis Ai definiert werden. Alternativ dazu können als Zuführ-Förderstrecke 6 und Abzugs-Förderstrecke 7 vorgegebene Fahrrouten im Raum zwischen dem Palettenlager 3 und den Kommissionierarbeitsplätzen A1 bis Ai definiert werden.

Kunden-Transporthilfsmittel T, die an den Kommissionierarbeitsplätzen A1 bis Ai befüllt worden sind, werden von automatisch führbaren Fahrzeugen 90 auf einer Warenausgangs-Förderstrecke 9 zum Warenausgangsbereich 11 transportiert. Der Warenausgangsbereich 11 umfasst eine Vielzahl von Warenausgangsstationen (Toren) 11.1 bis 11.j. Jedes automatisch führbare Fahrzeug 90 kann alle Kommissionierarbeitsplätze A1 bis Ai und alle Warenausgangsstationen 11.1 bis 11.j anfahren. Als Warenausgangs-Förderstrecke 9 kann der gesamte Raum zwischen den Kommissionierarbeitsplätzen A1 bis Ai und dem Warenausgangsbereich 11 definiert werden. Alternativ dazu können als Warenausgangs-Förderstrecke 9 vorgegebene Fahrrouten im Raum zwischen den Kommissionierarbeitsplätzen A1 bis Ai und dem Warenausgangsbereich 11 definiert werden.

## Patentansprüche

1. Verfahren zur Kommissionierung von auf Quell-Paletten (G, Q) in einem Palettenlager (3) gelagerten Waren gemäß Kundenaufträgen, wobei die Quell-Paletten (G) auf einer Wareneingangs-Förderstrecke (2) vom Wareneingang (1) in das Palettenlager (3) eingelagert werden, wobei Quell-Paletten (Q) über eine Zuführ-Förderstrecke (6) vom Palettenlager (3) zu zumindest einem Kommissionierarbeitsplatz (A1 - Ai) gefördert werden und über eine Abzugs-Förderstrecke (7) zurück in das Palettenlager (3) oder zu einem weiteren Kommissionierarbeitsplatz (A1 - Ai) gefördert werden, wobei jeder Kommissionierarbeitsplatz (A1 - Ai) Packstationen (K1 - Kn) aufweist, in denen Kunden-Transporthilfsmittel (T) zur Aufnahme der zu kommissionierenden Waren bereitgestellt werden, wobei beim Kommissionieren an all jenen Packstationen (K1 - Kn), die gemäß den Kundenaufträgen Waren aus der Quell-Palette (Q) zu erhalten haben, Waren aus der Quell-Palette (Q) in die Kunden-Transporthilfsmittel (T) gelegt werden, wobei die Beförderung der Quell-Paletten (G, Q, L) auf der Wareneingangs-Förderstrecke (2) und/oder auf der Zuführ-Förderstrecke (6) und/oder der Abzugs-Förderstrecke (7) mittels automatisch geführter Fahrzeuge (30, 60) erfolgt, wobei der Wareneingang (1) mehrere Stationen (1.1 - 1.m) umfasst und das Palettenlager (3) mehrere Stationen (3.1 - 3.n) umfasst und alle zwischen dem Wareneingang (1) und dem Palettenlager (3) bewegten automatisch geführten Fahrzeuge (30) alle Stationen des Wareneingangs (1.1 - 1.m) und des Palettenlagers (3.1 - 3.n) anfahren können, und dass mehrere Kommissionierarbeitsplätze (A1 - Ai) vorgesehen sind, wobei alle zwischen dem Palettenlager (3) und den Kommissionierarbeitsplätzen (A1 - Ai) bewegten automatisch geführten Fahrzeuge (60) alle Stationen des Palettenlagers (3.1 - 3.n) und alle Kommissionierarbeitsplätze (A1 - Ai) anfahren können, **dadurch gekennzeichnet, dass** für die Abarbeitung der Kundenaufträge benötigte Waren auf Quell-Paletten (Q) von einem übergeordneten Steuerungssystem aus dem Palettenlager (3) in einer wegoptimierten Sequenz ausgelagert und gemäß der errechneten Auslagersequenz die Quell-Paletten (Q) über die Zuführ-Förderstrecke (6) mittels den automatisch geführten Fahrzeugen (60) den Kommissionierarbeitsplätzen (A1 - Ai) zugeführt werden, wobei Quell-Paletten (G) auf einer Förderstrecke (5) mittels automatisch geführter Fahrzeuge zu einem Ganz-Palettenlager (10) geführt werden.

2. Verfahren nach Anspruch 1, **dadurch gekennzeichnet, dass** die Kunden-Transporthilfsmittel (T) auf einer Warenausgangs-Förderstrecke (9) mittels automatisch geführter Fahrzeuge (90) zu einem Warenausgangsbereich (11) transportiert werden.

3. Verfahren nach Anspruch 1 oder 2, **dadurch gekennzeichnet, dass** Quellpaletten (G) auf der Wareneingangs-Förderstrecke (2) mittels automatisch geführter Fahrzeuge (30) in ein Pick-to-Belt-Lager (4) eingelagert und vom Pick-to-Belt-Lager (4) auf einer Förderstrecke (8) mittels automatisch geführter Fahrzeuge zu den Kommissionierarbeitsplätzen (A1 - Ai) gefördert werden.

4. Verfahren nach Anspruch 2, **dadurch gekennzeichnet, dass** mehrere Kommissionierarbeitsplätze (A1 - Ai) vorgesehen sind und der Warenausgangsbereich (11) mehrere Stationen (11.1 - 11.j) umfasst, wobei alle zwischen den Kommissionierarbeitsplätzen (A1 - Ai) und dem Warenausgangsbereich (11) bewegten automatisch geführten Fahrzeuge (90) alle Kommissionierarbeitsplätze (A1 - Ai) und alle Stationen des Warenausgangsbereichs (11.1 - 11.j) anfahren können.

5. Verfahren nach einem der vorhergehenden Ansprüche, **dadurch gekennzeichnet, dass** die automatisch geführten Fahrzeuge (30, 50, 60, 70, 80, 90) optisch, oder induktiv, oder kapazitiv, oder per Funk gesteuert werden.

6. Verfahren nach einem der vorhergehenden Ansprüche, **dadurch gekennzeichnet, dass** die automatisch geführten Fahrzeuge (30, 50, 60, 70, 80, 90) die von ihnen transportierten Paletten (G, Q, L) anheben und absenken können.

7. Verfahren nach einem der vorhergehenden Ansprüche, **dadurch gekennzeichnet, dass** die Kommissionierarbeitsplätze (A1 - Ai) mit Robotern (R) ausgerüstet sind, die an jenen Packstationen (K1 - Kn), die gemäß den Kundenaufträgen Waren aus der Quell-Palette (Q) zu erhalten haben, Waren aus der Quell-Palette (Q) in die Kunden-Transporthilfsmittel (T) legen.

8. System zur Kommissionierung von auf Quell-Paletten (G, Q) in einem Palettenlager (3) gelagerten Waren gemäß Kundenaufträgen, umfassend eine Wareneingangs-Förderstrecke (2) zum Fördern der Quell-Paletten (G) vom Wareneingang (1) in das Palettenlager (3), eine Zuführ-Förderstrecke (6) zum Zuführen von Quell-Paletten (Q) aus dem Palettenlager (3) zu zumindest einem Kommissionierarbeitsplatz (A1 - Ai), der Packstationen (K1 - Kn) aufweist, wobei einem jeden Kundenauftrag zumindest eine Packstation (K1 - Kn) zuordenbar ist, in der ein Kunden-Transporthilfsmittel (T) zur Aufnahme der direkt aus den Quell-Paletten (Q) zu kommissionierenden Waren bereitstellbar ist, und eine Abzugsförderstrecke (7) zum Abziehen von nicht mehr benötigten Quell-Paletten aus dem Kommissionierarbeitsplatz (A1 - Ai) zurück in das Palettenlager (3) oder zu einem weiteren Kommissionierarbeitsplatz (A1 - Ai), wobei automatisch geführte Fahrzeuge (30, 60), die die Quell-Paletten (G, Q, L) auf der Wareneingangs-Förderstrecke (2) und/oder auf der Zufuhr-Förderstrecke (6) und/oder der Abzugs-Förderstrecke (7) befördern, wobei der Wareneingang (1) mehrere Stationen (1.1 - 1.m) umfasst und das Palettenlager (3) mehrere Stationen (3.1 - 3.n) umfasst und alle zwischen dem Wareneingang (1) und dem Palettenlager (3) bewegten automatisch geführten Fahrzeuge (30) alle Stationen des Wareneingangs (1.1 - 1.m) und alle Stationen des Regallagers (3.1 - 3.n) anfahren können, und dass mehrere Kommissionierarbeitsplätze (A1 - Ai) vorgesehen sind, wobei alle zwischen dem Palettenlager (3) und den Kommissionierarbeitsplätzen (A1 - Ai) bewegten automatisch geführten Fahrzeuge (60) alle Stationen des Palettenlagers (3.1 - 3.n) und alle Kommissionierarbeitsplätze (A1 - Ai) anfahren können, **dadurch gekennzeichnet, dass** für die Abarbeitung der Kundenaufträge benötigte Waren auf Quell-Paletten (Q) von einem übergeordneten Steuerungssystem aus dem Palettenlager (3) in einer wegoptimierten Sequenz ausgelagert und gemäß der errechneten Auslagersequenz die Quell-Paletten (Q) über die Zuführ-Förderstrecke (6) mittels den automatisch geführten Fahrzeugen (60) den Kommissionierarbeitsplätzen (A1 - Ai) zugeführt werden, wobei automatisch geführte Fahrzeuge (50), die Quell-Paletten (G) auf einer Förderstrecke (5) zu einem Ganz-Palettenlager (10) führen.

9. System nach Anspruch 8, **gekennzeichnet durch** automatisch geführte Fahrzeuge (90), die die Kunden-Transporthilfsmittel (T) auf einer Warenausgangs-Förderstrecke (9) zu einem Warenausgangsbereich (11) transportieren.

10. System nach Anspruch 8 oder 9, **gekennzeichnet durch** automatisch geführte Fahrzeuge (80), die Quellpaletten (G) auf der Wareneingangs-Förderstrecke (2) in ein Pick-to-Belt-Lager (4) einlagern und vom Pick-to-Belt-Lager (4) auf einer Förderstrecke (8) zu den Kommissionierarbeitsplätzen (A1 - Ai) fördern.

11. System nach Anspruch 9, **dadurch gekennzeichnet, dass** mehrere Kommissionierarbeitsplätze (A1 - Ai) vorgesehen sind und der Warenausgangsbereich (11) mehrere Stationen (11.1 - 11.j) umfasst, wobei alle zwischen den Kommissionierarbeitsplätzen (A1 - Ai) und dem Warenausgangsbereich (11) bewegten automatisch geführten Fahrzeuge (90) alle Kommissionierarbeitsplätze (A1 - Ai) und alle Stationen des Warenausgangs (11.1 - 11.j) anfahren können.

12. System nach einem der Ansprüche 8 bis 11, **dadurch gekennzeichnet, dass** die automatisch geführten Fahrzeuge (30, 50, 60, 70, 80, 90) optisch, oder induktiv, oder kapazitiv, oder per Funk gesteuert werden.

13. System nach einem der Ansprüche 8 bis 12, **dadurch gekennzeichnet, dass** die automatisch geführten Fahrzeuge (30, 50, 60, 70, 80, 90) Hebe- und Senkmittel für die von ihnen transportierten Paletten (G, Q) aufweisen.

14. System nach einem der Ansprüche 8 bis 13, **dadurch gekennzeichnet, dass** die Kommissionierarbeitsplätze (A1 - Ai) mit Robotern (R) ausgerüstet sind, die an jenen Packstationen (K1 - Kn), die gemäß den Kundenaufträgen Waren aus der Quell-Palette (Q) zu erhalten haben, Waren aus der Quell-Palette (Q) in die Kunden-Transporthilfsmittel (T) legen.

## Claims

1. A method for picking goods stored on source pallets (G, Q), in a pallet storage (3) according to customer orders, wherein the source pallets (G) are stored on a goods arrival conveyor path (2) from the goods arrival (1) into the pallet storage (3), wherein the source pallets (Q) are conveyed via a feeding conveyor path (6) from the pallet storage (3) to at least one picking station (A1 - Ai) and are conveyed via a discharge conveyor path (7) back to the pallet storage (3) or to a further picking station (A1 - Ai), wherein each picking station (A1 - Ai) has packing stations (K1 - Kn), in which there are provided customer transport means (T) for receiving the goods to be picked, wherein, when picking, there are placed at all those packing stations (K1 - Kn), which are to receive goods from the source pallet (Q) according to the customer orders, goods from the source pallet (Q) into the customer transport means (T), wherein the conveyance of the source pallets (G, Q, L) on the goods arrival conveyor path (2) and/or on the feeding conveyor path (6) and/or on the discharge conveyor path (7) is realized by means of automatically guided vehicles (30, 60), wherein the goods arrival (1) comprises several stations (1.1. - 1.m) and the pallet storage (3) comprises several stations (3.1. - 3.n) and all automatically guided vehicles (30) moved between the goods arrival (1) and the pallet storage (3) may drive to all stations of the goods arrival (1.1. - 1 .m) and of the pallet storage (3.1. - 3.n) and that there are provided several picking stations (A1 - Ai), wherein all automatically vehicles (60) moved between the pallet storage (3) and the picking stations (A1 - Ai) may drive to all stations of the pallet storage (3.1 - 3.n) and all picking stations (A1 - Ai), **characterized in that** the goods required for handling the customer orders are retrieved on source pallets (Q) by a superior control system from the pallet storage (3) in a path-optimized sequence and that the source pallets (Q) are fed, according to the calculated retrieval sequence, via the feeding conveyor path (6) by means of the automatically guided vehicles (60) to the picking stations (A1 - Ai.), wherein source pallets (G) are guided on a conveyor path (5) by means of automatically guided vehicles to a complete pallet storage (10).

2. A method according to claim 1, **characterized in that** the customer transport means (T) are transported on a goods dispatch conveyor path (9) by means of automatically guided vehicles (90) to a goods dispatch area (11).

3. A method according to claim 1 or 2, **characterized in that** the source pallets (G) are stored on the goods arrival conveyor path (2) by means of automatically guided vehicles (30) into a pick-to-belt storage (4) and are conveyed from the pick-to-belt storage (4) on a conveyor path (8) by means of automatically guided vehicles to the picking stations (A1 - Ai).

4. A method according to claim 2, **characterized in that** there are provided several picking stations (A1 - Ai) and that the goods dispatch area (11) comprises several stations (11.1 - 11.j), wherein all automatically guided vehicles (90) moved between the picking stations (A1 - Ai) and the goods dispatch area (11) may drive to all picking stations (A1- Ai) and all stations of the goods dispatch area (11.1 - 11.j).

5. A method according to any of the preceding claims, **characterized in that** the automatically guided vehicles (30, 50, 60, 70, 80, 90) are controlled in an optical or inductive or capacitive manner or via radio.

6. A method according to any of the preceding claims, **characterized in that** the automatically guided vehicles (30, 50, 60, 70, 80, 90) may lift and lower the pallets (G, Q, L) transported by them.

7. A method according to any of the preceding claims, **characterized in that** the picking stations (A1 - Ai) are equipped with robots (R), which place at those packing stations (K1 - Kn), which are to receive goods from the source pallet (Q) according to the customer orders, goods from the source pallet (Q) into the customer transport means (T).

8. A system for picking goods stored on source pallets (G, Q) in a pallet storage (3) according to customer orders, comprising a goods arrival conveyor path (2) for conveying the source pallets (G) from the goods arrival (1) into the pallet storage (3), a feeding conveyor path (6) for feeding source pallets (Q) from the pallet storage (3) to at least one picking station (A1 - Ai) having packing stations (K1 - Kn), wherein every single customer order may be assigned at least one packing station (K1 - Kn), in which there may be provided a customer transport means (T) for receiving the goods to be directly picked from the source pallets (Q), and a discharge conveyor path (7) for discharging source pallets no longer required from the picking station (A1 - Ai) back into the pallet storage (3) or to a further picking station (A1 - Ai), wherein automatically guided vehicles (30, 60) convey the source pallets (G, Q, L) on the goods arrival conveyor path (2) and/or on the feeding conveyor path (6) and/or on the discharge conveyor path (7), wherein the goods arrival (1) comprises several stations (1.1 - 1.m) and the pallet storage (3) comprises several stations (3.1 - 3.n) and all automatically guided vehicles (30) moved between the goods arrival (1) and the pallet storage (3) may drive to all stations of the goods arrival (1.1 - 1.m) and all stations of the rack storage (3.1 - 3.n), and that there are provided several picking stations (A1 - Ai), wherein all automatically guided vehicles (60) moved between the pallet storage (3) and the picking stations (A1 - Ai) may drive to all stations of the pallet storage (3.1 - 3.n) and all picking stations (A1 - Ai), **characterized in that** goods required for the handling of customer orders are retrieved on source pallets (Q) by a superior control system from the pallet storage (3) in a path-optimized sequence and that the source pallets (Q) are fed, according to the calculated retrieval sequence, via the feeding conveyor path (6) by means of the automatically guided vehicles (60) to the picking stations (A1 - Ai), wherein automatically guided vehicles (50) guide the source pallets (G) on a conveyor path (5) to a complete pallet storage (10).

9. A system according to claim 8, **characterized by** automatically guided vehicles (90), which transport the customer transport means (T) on a goods dispatch conveyor path (9) to a goods dispatch area (11).

10. A system according to claim 8 or 9, **characterized by** automatically guided vehicles (80), which store the source pallets (G) on the goods arrival conveyor path (2) into a pick-to-belt storage (4) and convey these from the pick-to-belt storage (4) on a conveyor path (8) to the picking stations (A1 - Ai).

11. A system according to claim 9, **characterized in that** there are provided several picking stations (A1 - Ai) and that the goods dispatch area (11) comprises several stations (11.1 - 11.j), wherein all automatically guided vehicles (90) moved between the picking stations (A1 - Ai) and the goods dispatch area (11) may drive to all picking stations (A1 - Ai) and all stations of the goods dispatch (11.1 - 11 .j).

12. A system according to any of the claims 8 to 11, **characterized in that** the automatically guided vehicles (30, 50, 60, 70, 80, 90) are controlled in an optical or inductive or capacitive manner or via radio.

13. A system according to any of the claims 8 to 12, **characterized in that** the automatically guided vehicles (30, 50, 60, 70, 80, 90) have lifting and lowering means for the pallets (G, Q) transported by them.

14. A system according to any of the claims 8 to 13, **characterized in that** the picking stations (A1 - Ai) are equipped with robots (R), which place at all those packing stations (K1 - Kn), which are to receive goods from the source pallet (Q) according to the customer orders, goods from the source pallet (Q) into the customer transport means (T).

## Revendications

1. Procédé pour le commissionnement de marchandises stockées sur des palettes sources (G, Q) dans un entrepôt à palettes (3) en fonction des commandes des clients, dans lequel les palettes sources (G) sont stockées sur une ligne de transport d'entrée de marchandises (2) de l'entrée de marchandises (1) dans l'entrepôt à palettes (3), dans lequel des palettes sources (Q) sont transportées par une ligne de transport d'admission (6) de l'entrepôt à palettes (3) jusqu'à au moins un poste de travail de commissionnement (A1 - Ai), dans lequel chaque poste de travail de commissionnement (A1 - Ai) comprend des stations de conditionnement (K1 - Kn) dans lesquelles des outils de transport clients (T) sont disposés pour la réception des marchandises à commissionner, dans lequel, lors du conditionnement, au niveau de toutes les stations de conditionnement (K1 - Kn) qui doivent recevoir des marchandises de la palette source (Q) selon les commandes des clients, des marchandises provenant de la palette source (Q) dont déposées dans les outils de transport clients (T), dans lequel le transport des palettes sources (G, Q, L) sur la ligne de transport d'entrée de marchandises (2) et/ou sur la ligne de transport d'admission (6) et/ou sur la ligne de transport d'évacuation (7) se fait au moyen de véhicules à guidage automatique (30, 60), dans lequel l'entrée de marchandises (1) comprend plusieurs stations (1.1 - l.m) et l'entrepôt à palettes (3) comprend plusieurs stations (3.1 - 3.n) et tous les véhicules à guidage automatique (30) se déplaçant entre l'entrée de marchandises (1) et l'entrepôt à palettes (3) peuvent aborder toutes les stations de l'entrée de marchandises (1.1 - 1.m) et de l'entrepôt à palettes (3.1 - 3.n), et plusieurs postes de travail de commissionnement (A1 - Ai) sont prévus, dans lequel tous les véhicules à guidage automatique (60) se déplaçant entre l'entrepôt à palettes (3) et les postes de travail de commissionnement (A1 - Ai) peuvent aborder toutes les stations de l'entrepôt à palettes (3.1 - 3.n) et tous les postes de travail de commissionnement (A1 - Ai), **caractérisé en ce que** les marchandises sur des palettes sources (Q) nécessaires pour le traitement des commandes des clients sont évacuées de l'entrepôt à palettes (3) par un système de commande de niveau supérieur dans une séquence à trajet optimisé et, selon la séquence d'évacuation calculée, les palettes sources (Q) sont envoyées aux postes de travail de commissionnement (A1 - Ai) sur la ligne de transport d'admission (6) au moyen des véhicules à guidage automatique (60), les palettes sources (G) étant guidées sur une ligne de transport (5) au moyen de véhicules à guidage automatique jusqu'à un entrepôt à palettes complètes (10).

2. Procédé selon la revendication 1, **caractérisé en ce que** les outils de transport clients (T) sont transportés sur une ligne de transport de sortie de marchandises (9) au moyen de véhicules à guidage automatique (90) jusqu'à une zone de sortie des marchandises (11).

3. Procédé selon la revendication 1 ou 2, **caractérisé en ce que** les palettes sources (G) sont amenées sur la ligne de transport d'entrée de marchandises (2) au moyen de véhicules à guidage automatique (30) dans un entrepôt "pick to belt" (4) et transportées de l'entrepôt "pick to belt" (4) sur une ligne de transport (8) au moyen de véhicules à guidage automatique jusqu'aux postes de travail de commissionnement (A1 - Ai).

4. Procédé selon la revendication 2, **caractérisé en ce que** plusieurs postes de travail de commissionnement (A1 - Ai) sont prévus et que la zone de sortie des marchandises (11) comprend plusieurs stations (11.1 - 11.j), dans lequel tous les véhicules à guidage automatique (90) se déplaçant entre les postes de travail de commissionnement (A1 - Ai) et la zone de sortie des marchandises (11) peuvent aborder tous les postes de travail de commissionnement (A1 - Ai) et toutes les stations de la zone de sortie des marchandises (11. - 11.j).

5. Procédé selon une des revendications précédentes, **caractérisé en ce que** les véhicules à guidage automatique (30, 50, 60, 70, 80, 90) sont à commande optique ou inductive ou capacitive ou par radio.

6. Procédé selon une des revendications précédentes, **caractérisé en ce que** les véhicules à guidage automatique (30, 50, 60, 70, 80, 90) peuvent lever et abaisser les palettes (G, Q, L) qu'ils transportent.

7. Procédé selon une des revendications précédentes, **caractérisé en ce que** les postes de travail de commissionnement (A1 - Ai) sont équipés de robots (R) qui, au niveau de toutes les stations de conditionnement (K1 - Kn) qui doivent recevoir des marchandises de la palette source (Q) selon les commandes des clients, déposent des marchandises de la palette source (Q) dans les outils de transport clients (T).

8. Système pour le commissionnement de marchandises stockées sur des palettes sources (G, Q) dans un entrepôt à palettes (3) en fonction des commandes des clients, comprenant une ligne de transport d'entrée de marchandises (2) pour le transport des palettes sources (G) de l'entrée de marchandises (1) dans l'entrepôt à palettes (3), une ligne de transport d'admission (6) pour l'admission à palettes sources (Q) de l'entrepôt à palettes (3) jusqu'à au moins un poste de travail de commissionnement (A1 - Ai) qui comprend des stations de conditionnement (K1 - Kn), à chaque commande de client pouvant être associée au moins une station de conditionnement (K1 -Kn) dans laquelle un outil de transport client (T) peut être disposé pour la réception des marchandises à commissionner directement à partir des palettes sources (Q), et une ligne de transport d'évacuation (7) pour l'évacuation des palettes sources qui ne sont plus nécessaires du poste de travail de conditionnement (A1 -Ai) et leur retour dans l'entrepôt à palettes (3) ou leur envoi vers un autre poste de travail de conditionnement (A1 - Ai), dans lequel des véhicules à guidage automatique (30, 60) qui transportent les palettes sources (G, Q, L) sur la ligne de transport d'entrée de marchandises (2) et/ou sur la ligne de transport d'admission (6) et/ou sur la ligne de transport d'évacuation (7), dans lequel l'entrée de marchandises (1) comprend plusieurs stations (1.1 - 1.m) et l'entrepôt à palettes (3) comprend plusieurs stations (3.1 - 3.n) et tous les véhicules à guidage automatique (30) se déplaçant entre l'entrée de marchandises (1) et l'entrepôt à palettes (3) peuvent aborder toutes les stations de l'entrée de marchandises (1.1 - 1.m) et de l'entrepôt à rayonnages (3.1 - 3.n), et plusieurs postes de travail de commissionnement (A1 - Ai) sont prévus, dans lequel tous les véhicules à guidage automatique (60) se déplaçant entre l'entrepôt à palettes (3) et les postes de travail de commissionnement (A1 - Ai) peuvent aborder toutes les stations de l'entrepôt à palettes (3.1 - 3.n) et tous les postes de travail de commissionnement (A1 - Ai), **caractérisé en ce que** les marchandises sur des palettes sources (Q) nécessaires pour le traitement des commandes des clients sont évacuées de l'entrepôt à palettes (3) par un système de commande de niveau supérieur dans une séquence à trajet optimisé et, selon la séquence d'évacuation calculée, les palettes sources (Q) sont envoyées aux postes de travail de commissionnement (A1 - Ai) sur la ligne de transport d'admission (6), des véhicules à guidage automatique (60) guidant les palettes sources (G) sur une ligne de transport (5) jusqu'à un entrepôt à palettes complètes (10).

9. Système selon la revendication 8, **caractérisé en ce que** des véhicules à guidage automatique (90) transportent les outils de transport clients (T) sur une ligne de transport de sortie de marchandises (9) jusqu'à une zone de sortie des marchandises (11).

10. Système selon la revendication 8 ou 9, **caractérisé par** des véhicules à guidage automatique (80) qui amènent les palettes sources (G) sur la ligne de transport d'entrée de marchandises (2) dans un entrepôt "pick to belt" (4) et les transportent de l'entrepôt "pick to belt" (4) sur une ligne de transport (8) jusqu'aux postes de travail de commissionnement (A1 - Ai).

11. Système selon la revendication 9, **caractérisé en ce que** plusieurs postes de travail de commissionnement (A1 - Ai) sont prévus et que la zone de sortie des marchandises (11) comprend plusieurs stations (11.1 - 11.j), dans lequel tous les véhicules à guidage automatique (90) se déplaçant entre les postes de travail de commissionnement (A1 - Ai) et la zone de sortie des marchandises (11) peuvent aborder tous les postes de travail de commissionnement (A1 - Ai) et toutes les stations de la zone de sortie des marchandises (11. - 11.j).

12. Système selon une des revendications 8 à 11, **caractérisé en ce que** les véhicules à guidage automatique (30, 50, 60, 70, 80, 90) sont à commande optique ou inductive ou capacitive ou par radio.

13. Système selon une des revendications 8 à 12, **caractérisé en ce que** les véhicules à guidage automatique (30, 50, 60, 70, 80, 90) possèdent des moyens de levage et d'abaissement pour les palettes (G, Q) qu'ils transportent.

14. Système selon une des revendications 8 à 13, **caractérisé en ce que** les postes de travail de commissionnement (A1 - Ai) sont équipés de robots (R) qui, au niveau de toutes les stations de conditionnement (K1 - Kn) qui doivent recevoir des marchandises de la palette source (Q) selon les commandes des clients, déposent des marchandises de la palette source (Q) dans les outils de transport clients (T).
